# EUROPÄISCHE PATENTANMELDUNG

(11) **EP 3 587 602 A1**
(43) Veröffentlichungstag der Anmeldung: **01.01.2020**
(21) Anmeldenummer: 19181436.7
(22) Anmeldetag: 20.06.2019
(51) Int. Cl.: C22B 3/20, C22B 7/00, C22B 58/00

(54) **VERFAHREN ZUR ABTRENNUNG VON INDIUM AUS METALLLEGIERUNGEN**

(30) Priorität: 21.06.2018 DE 102018114948
(71) Anmelder: Technische Universität Bergakademie Freiberg, 09599 Freiberg (DE)
(72) Erfinder: Bertau, Prof. Dr. Martin, 09599 Freiberg (DE); Vostal, Radek, 09603 Großschirma (DE); Reiber, Martin, 01127 Dresden (DE)
(74) Vertreter: Kailuweit & Uhlemann Patentanwälte Partnerschaft mbB

(57) **Zusammenfassung**

Die Erfindung betrifft ein Verfahren zur Abtrennung von Indium aus Metalllegierungen, insbesondere Flüssiglegierungen, durch sauren Aufschluss. Das Verfahren eignet sich sowohl zur Anwendung bei Metalllegierungen, enthaltend Indium und mindestens ein Metall mit einem tieferen Normalpotential als Indium, als auch zur Anwendung bei Metalllegierungen, welche zusätzlich mindestens ein Metall mit einem höheren Normalpotential als Indium enthalten.

## Beschreibung

Die Erfindung betrifft ein Verfahren zur Abtrennung von Indium aus Metalllegierungen, insbesondere Flüssigmetalllegierungen.

Indiumhaltige Legierungen, vor allem mit den Metallen Bismut, Zinn, Cadmium und Blei finden auf Grund ihres niedrigen Schmelzpunktes breiten Einsatz in Thermostaten, Sicherungen oder Sprinkleranlagen.

Für diese Legierungen existieren bisher keine etablierten Recyclingverfahren. Für indiumhaltige Flüssigmetalllegierungen, wie beispielsweise Galinstan, eine eutektische Legierung aus Gallium, Indium und Zinn, sind ebenfalls keine Wiederverwertungsverfahren vorhanden. Als Folge dessen werden diese Legierungen entsorgt, beispielsweise durch Verklappung oder Lagerung auf Deponien, und gehen somit dem Wertstoffkreislauf verloren. Zudem stellen sie eine hohe Umweltbelastung dar.

Ziel der vorliegenden Erfindung ist es, ein wirtschaftliches Verfahren zum Recycling von indiumhaltigen Metalllegierungen, vorzugsweise Flüssigmetalllegierungen wie Galinstan bereitzustellen.

Hauptproblem derartiger Metalllegierungen ist, dass nichtbenetzende Verhalten. Eine Aufarbeitung in wässrigen Medien stellt sich deshalb sehr schwierig dar.

WO2012068668A1 beschreibt die Wiedergewinnung von Indium und Gallium aus deren Legierungen über einen hydrometallurgischen Prozess. Dazu wird die Legierung mit einer stark oxidierenden Säure, beispielsweise H₂SO₄ und H₂O₂, behandelt um darüber die Indium- und Galliumsalze zu generieren. Diese werden dann mittels organischem Lösungsmittel extrahiert und Indium bzw. Gallium durch Behandlung der Lösung mit Säure oder Base erhalten.

In der GB 21,223 aus dem Jahr 1912 ist ein Verfahren zur Wiedergewinnung oder Abtrennung von Zinn aus Legierungen oder Mischungen, enthaltend Fremdmetalle, offenbart. Mittels systematischer fraktionierter Kristallisation des Zinns wird dieses frei von Verunreinigungen gewonnen, wobei die Verunreinigungen in einer Fraktion angereichert werden. Das verunreinigte Zinn wird dazu zunächst geschmolzen und abgekühlt, wobei sich Zinnkristalle bilden. Diese werden wiederum aufgeschmolzen und erneut kristallisiert, sodass es mit fortschreitendem Prozess zu einer Abreicherung der Verunreinigungen im Zinn kommt.

WO 2018/016778 offenbart ein Verfahren zur Aufreinigung von Metallen aus binären Metalllegierungen, durch elektrolytische Reduktion des ersten Metalls. Als Anode wird dabei eine Flüssigmetalllegierung eingesetzt.

Aus dem Stand der Technik bekannt sind Methoden zur Änderung der Zusammensetzung von festen Metalllegierungen, wie beispielsweise Messing.

Stankovic et al., Journal of Mining and Metallurgy, 2004, 40B, 1,21 - 39 beschreibt das Überleiten einer CuSO₄ Lösung über Messing-Partikel, eine Legierung aus Kupfer und Zink, wobei über einen elektrochemischen Prozess Kupfer auf den Partikeln abgeschiedenwird, währen Zinkionen aus der Legierung in Lösung gehen.

Für die Effizienz des Verfahrens ist u.a. die Größe der Partikel entscheidend. Partikelgrößen von 0,2 bis 0,315 mm sind für eine bestmögliche Abreicherung von Kupfer aus der Lösung notwendig.Ein Verfahren zur selektiven Rückgewinnung von Metallen aus, aus Flüssigmetalllegierungen, insbesondere zur Rückgewinnung von Indium aus Flüssigmetalllegierungen ist in noch keiner der Veröffentlichungen offenbart.

Aufgabe der Erfindung ist die Bereitstellung eines Verfahrens zur Gewinnung von Indium aus indiumhaltigen Metalllegierungen, bevorzugt Flüssigmetalllegierungen, bei dem eine selektive Trennung der Metallkomponenten erfolgt.

Gelöst wird die Aufgabe durch ein Verfahren zur Abtrennung von Indium aus Metalllegierungen, bevorzugt Flüssigmetalllegierungen, (ML1), enthaltend Indium und mindestens ein Metall mit einem tieferen Normalpotential als Indium (Me^{T}), durch sauren Aufschluss.

Dabei:
- wird zunächst der Anteil an Me^{T} in der Metalllegierung ML1 verringert, zum Erhalt einer Metalllegierung ML2, wobei die Verringerung des Anteils an Me^{T} folgende Schritte umfasst:
   a) Behandlung der Metalllegierung ML1 mit einer mineralischen Säure, wobei das Verhältnis der Stoffmenge von Säureanionen zur Gesamtstoffmenge aller Metallatome in der Legierung ML1 10 : 1 bis 1:1 ist, zum Erhalt einer ersten Lösung, enthaltend Indiumionen und Me^{T} Ionen, und
   b) Zugabe weiterer Metalllegierung ML1 zu der in Schritt a) erhaltenen Lösung, zum Erhalt einer zweiten Lösung, enthaltend Me^{T} Ionen, und einer Metalllegierung ML2, enthaltend Indium und Me^{T}, wobei der Anteil an Me^{T} in ML2 geringer ist, als in ML1, wobei die Menge an zugegebener weiterer Metalllegierung ML1 so groß ist, dass die Stoffmenge der Me^{T} Atome dieser weiteren ML1 mindestens so groß ist, wie die Stoffmenge der in der ersten Lösung enthaltenen Indiumionen,
- erfolgt im Anschluss ein saurer Aufschluss von ML2, zum Erhalt einer wässrigen Aufschlusslösung AL1, enthaltend Indiumionen und Me^{T} Ionen, und
- erfolgt die Abtrennung von Indium aus der Aufschlusslösung AL1.

Erfindungsgemäß erfolgt die Abtrennung des Indiums aus einer Metalllegierung ML1, enthaltend Indium und mindestens ein Metall mit einem tieferen Normalpotential als Indium (Me^{T}).

In einer bevorzugten Ausführungsform ist die Metalllegierung eine Flüssigmetalllegierung.

Im Sinne der Erfindung sind Flüssigmetalllegierungen niedrigschmelzenden Metall-Legierungen, insbesondere eutektische Legierungen, die bei Temperaturen unter 100°C flüssig vorliegen. Bevorzugt bestehen Flüssigmetalllegierungen aus verschiedenen Elementen, die bereits elementar einen eher tiefen Schmelzpunkt haben.

Eutektische Legierungen sind Legierungen mit einem eindeutig bestimmbaren Schmelzpunkt, den so genannten eutektischen Punkt, an dem alle Phasen des Systems, inklusive der Schmelze, im Gleichgewicht vorliegen. Dem Fachmann sind eutektische Verbindungen bekannt.

Die Metalllegierungen weisen vorzugsweise eine homogene Zusammensetzung auf. So sind in den Flüssigmetalllegierungen beispielsweise keine kristallinen Strukturen vorhanden. In diesem Fall liegen die Komponenten, insbesondere oberhalb des Schmelzpunktes alle flüssig nebeneinander vor, d.h. es existieren keine kristallinen Strukturen.

In einer Ausführungsform beträgt der Anteil der Masse an Indium in der Metalllegierung ML1 2 bis 70 %, bevorzugt 5 bis 50%, besonders bevorzugt 10 bis 25 %, insbesondere 18 bis 22% bezogen auf die Gesamtmasse der Legierung.

In einer Ausführungsform ist die Metalllegierung ML1 ausgewählt aus In-Ga-Legierung, In-Ga-Sn-Legierung, In-Ga-Bi-Legierung, In-Ga-Pb-Legierung, In-Ga-Pb-Sn-Bi-Legierung und / oder In-Ga-Bi-Sn-Legierung.

In einer Ausführungsform ist die Metalllegierung ML 1 eine Mischung aus mehreren Metalllegierungen.

In einer Ausführungsform enthält die Metalllegierung zusätzlich Verunreinigungen. In einer Ausführungsform sind die Verunreinigungen Metalle, ausgewählt aus Al, Fe und/oder Cu.

Erfindungsgemäß erfolgt ein saurer Aufschluss der Legierung durch deren Behandlung mit Säure.

Eine Abtrennung des Indiums, insbesondere auf elektrochemischem Wege, aus der sauren Lösung ist jedoch erst dann möglich, wenn zunächst der Anteil an Me^{T} in der Metalllegierung ML1 verringert wird. Diese Metalle (Me^{T}), die unedler als Indium sind, d.h. mit einem tieferen Normalpotential als Indium, werden zuerst abgetrennt und als Nebenprodukt so sauber wie möglich gewonnen (z.B. Ga). Erst dann wird das Indium aus der Legierung mobilisiert und gewonnen.

Normalpotentiale von Metallen werden relativ zur Normalwasserstoffelektrode gemessen. Unedle Metalle haben ein tieferes Normalpotential als Wasserstoff, edle Metalle haben ein höheres Normalpotential als Wasserstoff.

Metalle mit tieferem Normalpotential als Indium werden im Folgenden mit Me^{T} benannt. Im Sinne der Erfindung sind solche Metalle mit einem tieferem Normalpotential als Indium (Me^{T}) beispielsweise die Metalle, die in der Tabelle 1 oberhalb von Indium stehen.

Metalle mit einem höheren Normalpotential als Indium (Me^{H}) stehen in der Tabelle unterhalb des Indiums.

In einer Ausführungsform sind die Me^{T} ausgewählt aus den Metallen in Tabelle 1, die oberhalb des Indiums aufgeführt sind.

**Tabelle 1: Vergleich der Normalpotentiale verschiedener Metalle**

| **Name des Metalls** | | | **Normalpotenzial (E⁰ pro Volt bei 25° Celsius)** |
|---|---|---|---|
| Lithium | | | -3,04 |
| Caesium | | | -3,03 |
| Rubidium | | | -2,98 |
| Francium | | | -2,90 |
| Kalium | | | -2,93 |
| Barium | | | -2,91 |
| Strontium | | | -2,90 |
| Calcium | | | -2,87 |
| Radium | | | -2,80 |
| Natrium | | | -2,71 |
| Lanthan | | | -2,38 |
| Magnesium | | | -2,37 |
| Cer | | | -2,34 |
| Uran | | | -1,80 |
| Aluminium | | | -1,66 |
| Titan | | | -1,63 |
| Mangan | | | -1,19 |
| Vanadium | | | -1,18 |
| Niob | | | -1,10 |
| Chrom | | | -0,91 |
| Zink | | | -0,76 |
| Chrom | | | -0,74 |
| Gallium | | | -0,55 |
| Eisen | | | -0,45 |
| Cadmium | | | -0,40 |
| **Indium** | | | **-0,34** |
| Cobalt | | | -0,28 |
| Nickel | | | -0,26 |
| Molybdän | | | -0,20 |
| Zinn | | | -0,14 |
| Blei | | | -0,13 |
| Wolfram | | | -0,10 |
| Eisen | | | -0,04 |
| Wasserstoff | | | **0,00** |

Metalle, die eine noch höheres Normalpotential als Wasserstoff aufweisen, werden edle Metalle genannt. Diese haben ebenfalls ein höheres Normalpotential als Indium. Das sind beispielsweise Rhenium, Kupfer, Ruthenium, Thallium, Rhodium, Silber, Quecksilber, Palladium, Iridium, Gold, Platin.

Erfindungsgemäß wird zunächst der Anteil an Me^{T}, beispielsweise Gallium, in der Metalllegierung ML1 verringert, zum Erhalt einer Metalllegierung ML2, wobei die Verringerung des Anteils an Me^{T} folgende Schritte umfasst:

### Schritt a)

Erfindungsgemäß wird die Metalllegierung ML1 zunächst mit einer mineralischen Säure behandelt. Vorzugsweise ist die mineralische Säure ausgewählt aus Salpetersäure, Schwefelsäure, Salzsäure und Mischungen dieser.

Erfindungsgemäß beträgt die Konzentration der Säure 0,3 bis 10 mol/l, bevorzugt 1 bis 7 mol/l bevorzugt 3 bis 5 mol/l.

In einer Ausführungsform ist die mineralische Säure konzentrierte Säure.

In einer Ausführungsform ist die mineralische Säure eine wässrige Lösung der Säure. In einer Ausführungsform beträgt die Konzentration der Säure in der wässrigen Lösung mindestens 10 Gew.-%.

Erfindungsgemäß ist das Verhältnis der Stoffmenge von Säureanionen zur Gesamtstoffmenge aller Metallatome in der Legierung ML1 10 : 1 bis 1:1.

In einer Ausführungsform ist das Verhältnis der Stoffmenge von Säureanionen zur Gesamtstoffmenge aller Metallatome in der Legierung ML1 kleiner 10 : 1.

In einer Ausführungsform ist die Stoffmenge der Säureanionen in der eingesetzten Säure oder wässrigen Lösung der Säure stöchiometrisch zur Gesamtmenge der Metallatome in der Legierung ML1. In einer Ausführungsform beträgt das Verhältnis der Stoffmenge von Säureanionen zur Stoffmenge an Metallatome in der Legierung ML1 5 : 1 bis 1,1:1, bevorzugt 3 : 1 bis 1,1:1, besonders bevorzugt 1,1 : 1.

In einer Ausführungsform erfolgt die Behandlung der Metalllegierung ML1 mit der mineralischen Säure durch Zugabe der Säure oder Säurelösung zur aufzubereitenden Metalllegierung und Vermengen der Komponenten.

Erfindungsgemäß erfolgt die Behandlung bei Temperaturen von 0 bis 110°C, bevorzugt 70 bis 100 °C, besonders bevorzugt bei 90 bis 100 °C.

Durch die Behandlung der Metalllegierung ML1 mit Säure bildet sich eine erste Lösung, enthaltend Indiumionen und Me^{T} Ionen. Geht man von einer ML1, enthaltend Indium und Gallium, aus, so erhält man in Schritt a) eine erste Lösung, enthaltend Indium- und Galliumionen.

### Schritt b)

Zu der in Schritt a) erhaltenen (ersten) Lösung wird im nächsten Schritt b) weitere Metalllegierung ML 1 gegeben. Dabei ist die Menge an weiterer Metalllegierung ML1 so groß, dass die Stoffmenge der Me^{T} Atome dieser weiteren ML1 mindestens so groß ist, wie Stoffmenge der in der ersten Lösung enthaltenen Indiumionen.

Indium, welches in der ersten Lösung (nach Durchführung von Schritt a)) zunächst noch in oxidierter Form vorliegt, wird dabei zu metallischem Indium reduziert und von der Metalllegierung aufgenommen. Gleichzeitig geht das Me^{T} aus der weiteren Metalllegierung ML1 in Lösung.

Die Zusammensetzung von ML1 ändert sich dadurch und es bilden sich durch die Verschiebung des Phasengleichgewichts innerhalb der Legierung Mischkristalle aus den einzelnen Elementen. Man erhält eine zweite Lösung und eine Metalllegierung ML2.

Die Lösung enthält Me^{T} Ionen, beispielsweise Galliumionen.

Das Me^{T} liegt also in der Lösung in Form seiner Kationen vor. Gallium liegt beispielsweise als Ga³⁺ Ionen vor.

Die Metalllegierung ML2 enthält Indium und Me^{T} wobei der Anteil an Me^{T} in ML2 geringer ist, als in ML1. In einer Ausführungsforn ML 2 fest. In einer Ausführungsform ist ML2 eine Mischung aus festen und flüssigen Bestandteilen

Geht man von einer ML1, enthaltend Indium und Gallium aus, so erhält man in Schritt b) eine zweite Lösung, enthaltend Gallium, und einen bevorzugt festen Rückstand (= ML2), enthaltend Gallium und Indium in metallischer Form. In einer Ausführungsform enthält ML2 In/Ga Mischkristalle.

Erfindungsgemäß erfolgt anschließend ein saurer Aufschluss von ML2, zum Erhalt einer wässrigen Aufschlusslösung AL1, enthaltend Indiumionen und Me^{T} Ionen.

In einer Ausführungsform erfolgt der saure Aufschluss durch Behandlung von ML2 mit einer mineralischen Säure zum Erhalt einer wässrigen Aufschlusslösung, enthaltend Indiumionen und Me^{T} Ionen. Vorzugsweise handelt es sich bei der mineralischen Säure um eine der Säuren Schwefelsäure oder Salpetersäure oder um Mischungen dieser.

In einer Ausführungsform ist die mineralische Säure eine wässrige Lösung der Säure. In einer Ausführungsform beträgt die Konzentration der Säure in der wässrigen Lösung 0,1 bis 20 mol/l, bevorzugt 1 bis 10 mol/l.

In einer Ausführungsform ist die Stoffmenge der Säureanionen in der eingesetzten Säure oder wässrigen Lösung der Säure, stöchiometrisch zur Gesamtmenge der Metallatome in der Legierung ML2. In einer Ausführungsform beträgt das Verhältnis der Stoffmenge von Säureanionen zur Stoffmenge an Metallatomen in der Legierung ML2 5: 1 bis 1,1:1, bevorzugt 3 : 1 bis 1,1:1, besonders bevorzugt 1,1 : 1. In einer Ausführungsform beträgt das Verhältnis der Stoffmenge von Säureanionen zur Stoffmenge an Metallatomen in der Legierung ML2 5: 1 bis 1:1.

In einer Ausführungsform erfolgt die Behandlung der Metalllegierung ML2 mit der mineralischen Säure durch Zugabe der Säure oder Säurelösung zur aufzubereitenden Metalllegierung und Vermengen der Komponenten, wobei zunächst eine Suspension entsteht.

In einer Ausführungsform erfolgt die Behandlung der Metalllegierung ML2 bei Temperaturen von 0 bis 110 °C, bevorzugt 70 bis 100 °C, besonders bevorzugt bei 90 bis 100 °C.

Durch die Behandlung der Metalllegierung ML2 mit Säure bildet sich eine Aufschlusslösung AL1, enthaltend Indium und Me^{T}, beispielsweise Gallium.

Erfindungsgemäß erfolgt danach die Abtrennung von Indium aus der Aufschlusslösung.

In einer Ausführungsform, in der die Metalllegierung ML1 zusätzlich mindestens ein Metall mit einem höheren Normalpotential als Indium (Me^{H}) enthält, umfasst die Abtrennung von Indium aus der Aufschlusslösung folgende Schritte:
i) Zugabe einer Base zu der Aufschlusslösung, zum Erhalt eines Niederschlags, enthaltend Indiumionen und Me^{T} Ionen und einer Lösung, enthaltend Indiumionen und Me^{T} Ionen
ii) Zugabe einer organischen Säure zur Lösung und deren elektrolytische Behandlung, zur Abscheidung von Indium auf der Kathode.
iii) Behandlung des in Schritt i) erhaltenen Niederschlags mit einer wässrigen, basischen Lösung, zum Erhalt eines festen Rückstands, enthaltend Indium und eine Lösung, enthaltend Me^{T} Ionen,
iv) Behandlung des Indium-haltigen, festen Rückstands aus Schritt iii) mit Schwefelsäure, zum Erhalt einer Indiumionen-haltigen Lösung
v) Elektrolytische Behandlung der in Schritt v) entstandenen Lösung zur Abscheidung metallischen Indiums auf der Kathode.

In einer anderen Ausführungsform, in der kein solches Metall mit höherem Normalpotential als Indium enthalten ist, umfasst die erfindungsgemäße Abtrennung von Indium aus der Aufschlusslösung AL1 lediglich den oben genannten Schritt ii), d.h.

Zugabe einer organischen Säure zur Lösung und deren elektrolytische Behandlung, zur Abscheidung von Indium auf der Kathode.

Im Sinne der Erfindung ist mit "einer organischen Säure" (beispielsweise in der letztgenannten Ausführungsform oder in Schritt ii) der davor genannten Ausführungsform) auch eine Mischung mehrerer organischer Säuren umfasst.

Bevorzugt ist diese organische Säure eine mit Metallionen Komplexe bildende Säure oder eine Mischung mehrerer mit Metallionen Komplexe bildenden Säuren. Vorzugsweise sind das Nitrilotriessigsäure und/oder Methylglycinsäure.

Vorteilhaft bildet die Säure Komplexe mit Indium, welches dann effektiver abgeschieden wird. Die organische Säure verhindert Dendritenwachstum (baum- oder strauchartige Kristallstrukturen, zum Beispiel auf einer Elektrode) und es wird so Indium als eine glatte Indiumschicht abgeschieden.

Man erhält eine Elektrolytlösung. In einer Ausführungsform wird die organische Säure in wässriger Lösung zugegeben. In einer Ausführungsform wird so viel organische Säure zugegeben, dass die Konzentration der Säure in der Elektrolytlösung 1 bis 20 g/l, bevorzugt 10 bis 15 g/l beträgt.

In einer Ausführungsform wird so viel organische Säure zugegeben, dass die Konzentration der Säure in der Elektrolytlösung 0,001 bis 0,3 mol/L, bevorzugt 0,01 bis 0,3 mol/L, besonders bevorzugt 0,1 bis 0,2 mol/L beträgt.

Die so erhaltene Elektrolytlösung wird elektrolytisch behandelt, wobei Indium auf der Kathode abgeschieden wird.

In einer Ausführungsform wird die Elektrolytlösung dazu in einer Elektrolysezelle vorgelegt. Es wird ein Potential von 0,1 bis 10, bevorzugt 0,5 bis 5 V angelegt und Indium aus der Lösung reduziert und metallisch auf der Kathode abgeschieden. Das sogebildete metallische Indium wird in einer Ausführungsform durch den Fachmann bekannte Methoden, wie Abkratzen, Auflösen oder weitere elektrolytische Behandlung, von der Kathode entfernt

In einer Ausführungsform des erfindungsgemäßen Verfahrens enthält die Metalllegierung ML1 (zusätzlich zu dem mindestens einen Me^{T},) mindestens ein Metall mit einem höheren Normalpotential als Indium, wobei diese Metalle werden im Folgenden mit Me^{H} benannt werden. Im Weiteren wird diese Metalllegierung, enthaltend Indium Me^{H} und Me^{T}, ML1+ genannt. Dabei werden die Schritte a) und b) des erfindungsgemäßen Verfahrens durch die Schritte a-i) und b-i) ersetzt, und es gilt:
a-i) = Behandlung der Metalllegierung ML1+ mit einer mineralischen Säure, wobei das Verhältnis der Stoffmenge von Säureanionen zur Gesamtstoffmenge aller Metallatome in der Legierung ML1+ 10:1 bis 1:1 ist, zum Erhalt einer ersten Lösung, enthaltend Indiumionen, Me^{T} Ionen und Me^{H} Ionen
b-i) = Zugabe weiterer Metalllegierung ML1+ zu der in Schritt a-i) erhaltenen ersten Lösung, zum Erhalt einer zweiten Lösung, enthaltend Me^{T} Ionen, und einer Metalllegierung ML2+, enthaltend Indium, Me^{T} und Me^{H}, wobei der Anteil an Me^{T} in ML2+ geringer ist, als in ML1+, wobei die Menge an zugegebener weiterer Metalllegierung ML1+ so groß ist, dass die Stoffmenge der Me^{T} Atome dieser weiteren ML1+ mindestens so groß ist, wie die Summe der Stoffmengen der in der ersten Lösung enthaltenen Indiumionen und Me^{H} Ionen.

In einer Ausführungsform ist die Metalllegierung ML1+ eine Flüssigmetalllegierung.

In einer Ausführungsform ist die Metalllegierung ML1+ Galinstan.

Galinstan ist eine silberne, eutektische Legierung aus Gallium, Indium und Zinn. **Gal**lium, **In**dium und **Stan**num (lateinisch für Zinn) bilden das Kunstwort Galinstan. Die Legierung ist bei Raumtemperatur flüssig und geht laut Herstellerangaben bei Temperaturen unter-19 °C in den festen Aggregatzustand über. Galinstan besteht zu 65 bis 95 % aus Gallium, zu 5 bis 22 % aus Indium und zu 0 bis 11 % aus Zinn. Einen besonders niedrigen Schmelzpunkt weist dabei laut Herstellerangaben die Legierung aus 68 bis 69 % Gallium, 21 bis 22 % Indium und 9,5 bis 10,5 % Zinn mit -19,5 °C auf.

Galinstan wird vor allem als ungiftiger Ersatz in vielen Anwendungen eingesetzt, bei denen flüssiges Quecksilber oder Natrium-Kalium-Eutektikum (NaK) verwendet wurde; unter anderem als Flüssigkeit für Fieberthermometer oder als Gleitmittel im Hochvakuum, beispielsweise in Kathodenstrahlröhren.

### Schritt a-i)

Analog vorausgegangener Ausführungen, wird die Metalllegierung ML1+ zunächst mit einer mineralischen Säure behandelt. Vorzugsweise ist die mineralische Säure ausgewählt aus Salpetersäure, Schwefelsäure und Salzsäure und Mischungen dieser.

In einer Ausführungsform ist die mineralische Säure konzentrierte Säure.

In einer Ausführungsform ist die mineralische Säure eine wässrige Lösung der Säure. In einer Ausführungsform beträgt die Konzentration der Säure in der wässrigen Lösung mindestens 10 Gew.-%.

Erfindungsgemäß ist das Verhältnis der Stoffmenge von Säureanionen zur Gesamtstoffmenge aller Metallatome in der Legierung ML1 10 : 1 bis 1:1.

In einer Ausführungsform ist das Verhältnis der Stoffmenge von Säureanionen zur Gesamtstoffmenge aller Metallatome in der Legierung kleiner 10 : 1.

In einer Ausführungsform ist die Stoffmenge der Säureanionen in der eingesetzten Säure oder wässrigen Lösung der Säure, stöchiometrisch zur Gesamtmenge der Metallatome in der Legierung ML1+. In einer Ausführungsform beträgt das Verhältnis der Stoffmenge von Säureanionen zur Stoffmenge an Metallatomen in der Legierung 5: 1 bis 1,1:1, bevorzugt 3 : 1 bis 1,1:1, besonders bevorzugt 1,1 : 1. In einer Ausführungsform beträgt das Verhältnis der Stoffmenge von Säureanionen zur Stoffmenge an Metallatomen in der Legierung ML1+ 5 : 1 bis 1:1.

In einer Ausführungsform erfolgt die Behandlung der Metalllegierung ML1+ mit der mineralischen Säure durch Zugabe der Säure oder Säurelösung zur aufzubereitenden Metalllegierung ML1+ und Vermengen der Komponenten.

In einer Ausführungsform erfolgt die Behandlung von ML1+ bei Temperaturen von 0 bis 110 °C, bevorzugt 70 bis 100 °C, besonders bevorzugt bei 90 bis 100 °C.

Durch die Behandlung der Metalllegierung ML1+ mit einer mineralischen Säure bildet sich eine erste Lösung, enthaltend Indiumionen, Me^{H} Ionen und Me^{T} Ionen. Geht man von einer ML1+, enthaltend Indium, Zinn und Gallium, aus, so erhält man in Schritt a-i) eine erste Lösung, enthaltend Indium-, Zinn- und Galliumionen.

### Schritt b-i)

Zu der in Schritt a-i) erhaltenen (ersten) Lösung wird im nächsten Schritt b-i) weitere Metalllegierung ML1+ und/oder ML1 gegeben.

In einer weiteren Ausführungsform wird zu der in Schritt a-i) erhaltenen (ersten) Lösung im nächsten Schritt b-i) nur weitere indiumhaltige Metalllegierung ML1+ zugegeben.

Für den Fall, dass die zugegebene weitere Metalllegierung ML1+ ist (d.h. dass u.a. mindestens ein Metall mit einem höheren Normalpotential als Indium enthalten ist), gilt: Es ist die Menge an weiterer Metalllegierung ML1+ so groß, dass die Stoffmenge der Me^{T} Atome dieser weiteren ML1+ mindestens so groß ist, wie Summe der Stoffmengen der in der ersten Lösung enthaltenen Indiumionen und Me^{H} Ionen.

Für den Fall, dass die zugegebene weitere Metalllegierung ML1 ist (in der kein solches Metall mit höherem Normalpotential als Indium enthalten ist), gilt: Es ist die Menge an weiterer Metalllegierung ML1 so groß, dass die Stoffmenge der Me^{T} Atome dieser weiteren ML1 mindestens so groß ist, wie die Stoffmenge der in der ersten Lösung enthaltenen Indiumionen.

Beide zuletzt genannten Fälle können kombiniert werden.

Indium und, falls vorhanden, Me^{H}, welche in der Lösung zunächst noch in oxidierter Form vorliegen, werden dabei zu metallischem Indium und metallischem Me^{H} reduziert. Gleichzeitig geht das Me^{T} aus der weiteren Metalllegierung ML1 und/oder ML1+ in Lösung.

Man erhält eine zweite Lösung und eine Metalllegierung ML2+. Die Lösung enthält Me^{T} Ionen, beispielsweise Galliumionen. Das Me^{T} liegt dann in Form seiner Kationen vor. Gallium liegt beispielsweise als Ga³⁺ Ionen vor.

Die Metalllegierung ML2+ enthält Indium, Me^{H} und Me^{T} wobei der Anteil an Me^{T} in ML2+ geringer ist, als in ML1+. In einer Ausführungsform ist ML2+ fest. In einer Ausführungsform ist ML2+ eine Mischung aus festen und flüssigen Bestandteilen.

Geht man von einer ML1+, enthaltend Indium, Zinn und Gallium aus, so erhält man in Schritt b-i) eine zweite Lösung, enthaltend Gallium und einen bevorzugt festen Rückstand (= ML2+), enthaltend Gallium, Zinn und Indium in metallischer Form.

In einer Ausführungsform ist die Zusammensetzung des Rückstandes nicht homogen. In einer Ausführungsform enthält der Rückstand kristalline Strukturen.

Erfindungsgemäß erfolgt anschließend ein saurer Aufschluss von ML2+, zum Erhalt einer wässrigen Aufschlusslösung AL2, enthaltend Indiumionen, Me^{H} Ionen und Me^{T} Ionen.

In einer Ausführungsform erfolgt der saure Aufschluss durch Behandlung von ML2+ mit einer mineralischen Säure, ausgewählt aus Schwefelsäure und/oder Salpetersäure, zum Erhalt einer wässrigen Aufschlusslösung AL2, enthaltend Indiumionen, Me^{H} Ionen und Me^{T} Ionen.

Die in Schritt b-i) erhaltene ML2+, enthaltend Indium, Me^{H} und Me^{T}, wird im nächsten Schritt mit einer mineralischen Säure. Vorzugsweise ist diese mineralische Säure ausgewählt aus Schwefelsäure, Salpetersäure und Mischungen dieser.

In einer Ausführungsform ist die mineralische Säure eine wässrige Lösung der Säure. In einer Ausführungsform beträgt die Konzentration der Säure in der wässrigen Lösung 0,1 bis 20 mol/l, bevorzugt 1 bis 10 mol/l.

In einer Ausführungsform ist die Stoffmenge der Säureanionen in der eingesetzten Säure oder wässrigen Lösung der Säure, stöchiometrisch zur Gesamtmenge der Metallatome in der Legierung ML2+. In einer Ausführungsform beträgt das Verhältnis der Stoffmenge von Säureanionen zur Stoffmenge an Metallatomen in der Legierung ML2+ 5: 1 bis 1,1:1, bevorzugt 3 : 1 bis 1,1:1, besonders bevorzugt 1,1 : 1. In einer Ausführungsform beträgt das Verhältnis der Stoffmenge von Säureanionen zur Stoffmenge an Metallatomen in der Legierung ML2+ 5 : 1 bis 1:1.

In einer Ausführungsform erfolgt die Behandlung der Metalllegierung ML2+ mit der mineralischen Säure durch Zugabe der Säure oder Säurelösung zur aufzubereitenden Metalllegierung und Vermengen der Komponenten, wobei zunächst eine Suspension entsteht.

In einer Ausführungsform erfolgt die Behandlung bei Temperaturen von 0 bis 110 °C, bevorzugt 70 bis 100 °C, besonders bevorzugt bei 90 bis 100 °C.

Durch die Behandlung der Metalllegierung mit Säure bildet sich eine Aufschlusslösung AL2, enthaltend Indium, Me^{H} (beispielsweise Zinn) und Me^{T}, beispielsweise Gallium.

Erfindungsgemäß erfolgt danach die Abtrennung von Indium aus der Aufschlusslösung AL2.

In einer Ausführungsform umfasst die Abtrennung von Indium aus der Aufschlusslösung AL2 folgende Schritte:
i) Zugabe einer Base zu der Aufschlusslösung AL2, zum Erhalt eines Niederschlags, enthaltend Indiumionen, Me^{H} Ionen und Me^{T} Ionen, und einer Lösung, enthaltend Indiumionen und Me^{T} Ionen, jedoch keine Me^{H} Ionen,
ii) Zugabe einer organischen Säure zu der in Schritt i) entstandenen Lösung und deren elektrolytische Behandlung, zur Abscheidung von Indium auf der Kathode,
iii) Behandlung des in Schritt i) erhaltenen Niederschlags mit einer wässrigen, basischen Lösung, zum Erhalt eines festen Rückstands, enthaltend Indium Ionen und Me^{H} Ionen, und eine Lösung, enthaltend Me^{T} Ionen,
iv) Behandlung des in Schritt iii) erhaltenen Rückstands mit einer Base, wobei eine Me^{H} lonenhaltige Lösung und ein Indium-haltiger fester Rückstand entsteht,
v) Behandlung des Indium-haltigen festen Rückstands aus Schritt iv) mit Schwefelsäure, zum Erhalt einer Indiumionen-haltigen Lösung,
vi) Elektrolytische Behandlung der in Schritt v) entstandenen Lösung zur Abscheidung metallischen Indiums auf der Kathode.

### Schritt i)

Im Schritt i) erfolgt die Zugabe einer Base, bevorzugt in Form einer wässrigen basischen Lösung, zu der Aufschlusslösung AL2.

In einer Ausführungsform ist die Base eine anorganische Base. In einer Ausführungsform ist sie ausgewählt aus NH₃, KOH, NaOH und Mischungen dieser.

In einer Ausführungsform beträgt die Konzentration der Base in der wässrigen basischen Lösung 0,1 bis 20 mol/l, bevorzugt 1 bis 10 mol/l.

In einer Ausführungsform ist die Menge der wässrigen basischen Lösung so gewählt, dass das Verhältnis der Stoffmenge an Basenanionen zu Me^{H}-Kationen 5 : 1, bevorzugt 3 : 1, besonders bevorzugt 1,1 : 1 beträgt.

In einer Ausführungsform erfolgt die Behandlung der Aufschlusslösung AL2 durch Zugabe der Base und Vermengen der Mischung, bevorzugt bei Temperaturen von 0 bis 100 °C, besonders bevorzugt 60 bis 100 °C.

Me^{H} Ionen und ein Teil der Indiumionen und Me^{T} Ionen werden dabei als basischer Niederschlag ausgefällt und in einer Ausführungsform durch dem Fachmann bekannte Methoden, beispielsweise Filtration, von der Lösung abgetrennt. Man erhält eine Lösung, enthaltend Indiumionen und Me^{T} Ionen, jedoch vorteilhaft keine Me^{H} Ionen.

### Schritt ii)

Anschliessend erfolgt eine elektrolytische Behandlung der in Schritt i) entstandenen Lösung zur Abscheidung metallischen Indiums auf der Kathode.

In einer Ausführungsform wird dazu die in Schritt i) entstandene Lösung mit einer organischen Säure versetzt, zum Erhalt einer Elektrolytlösung.

Im Sinne der Erfindung ist mit dem Begriff "eine organische Säure" auch eine Mischung mehrerer organischer Säuren umfasst.

Bevorzugt ist diese organische Säure eine mit Metallionen Komplexe bildende Säure oder eine Mischung mehrerer mit Metallionen Komplexe bildenden Säuren. Vorzugsweise sind das Nitrilotriessigsäure und/oder Methylglycinsäure.

In einer Ausführungsform wird die organische Säure in wässriger Lösung zugegeben. In einer Ausführungsform wird so viel organische Säure zugegeben, dass die Konzentration der Säure in der Elektrolytlösung 1 bis 20 g/l, bevorzugt 10 bis 15 g/l beträgt.

In einer Ausführungsform wird so viel organische Säure zugegeben, dass die Konzentration der Säure in der Elektrolytlösung 0,001 bis 0,3 mol/L, bevorzugt 0,01 bis 0,3 mol/L, besonders bevorzugt 0,1 bis 0,2 mol/L beträgt.

Die so erhaltene Elektrolytlösung wird elektrolytisch behandelt, wobei Indium auf der Kathode abgeschieden wird. Me^{T} Ionen, beispielsweise Galliumionen, verbleiben vorteilhaft in der Lösung. In einer Ausführungsform wird die Elektrolytlösung dazu in einer Elektrolysezelle vorgelegt. Es wird ein Potential von 0,5 bis 5 V, bevorzugt 2 bis 4 V, besonders bevorzugt 3 bis 4 V angelegt und Indium aus der Lösung reduziert und metallisch auf der Kathode abgeschieden. Das so gebildete metallische Indium wird in einer Ausführungsform durch den Fachmann bekannte Methoden, wie abkratzen, auflösen oder weitere elektrolytische Behandlung, von der Kathode entfernt.

### Schritt iii)

Der in Schritt i) erhaltene Niederschlag, enthaltend Indiumionen, Me^{T} Ionen und Me^{H} Ionen wird im Schritt iii) mit einer wässrigen, basischen Lösung behandelt.

In einer Ausführungsform ist die Base eine anorganische Base. In einer Ausführungsform ist sie ausgewählt aus KOH, NaOH und Mischungen dieser.

In einer Ausführungsform beträgt die Konzentration der Base in der wässrigen basischen Lösung 0,1 bis 20 mol/l, bevorzugt 1 bis 10 mol/l, besonders bevorzugt 1 bis 5 mol/l.

In einer Ausführungsform ist die Menge der wässrigen basischen Lösung so gewählt, dass das Verhältnis der Stoffmenge an Basenanionen zu Metallkationen im Niederschlag 5: 1, bevorzugt 3 : 1 beträgt.

Man erhält eine wässrige Lösung, enthaltend Me^{T} Ionen und einen festen Rückstand, enthaltend Indiumionen und Me^{H} Ionen.

### Schritt iv)

Der in Schritt iii) entstandene basische feste Rückstand, enthaltend Indiumionen und MeH Ionen, wird im Schritt iv) erneut mit einer Base behandelt. In einer Ausführungsform ist die Base ausgewählt aus NaOH, KOH und Mischungen dieser.

In einer Ausführungsform wird die Base konzentriert zugegeben. In einer Ausführungsform wird die Base in einer wässrigen basischen Lösung zugegeben. In einer Ausführungsform beträgt die Konzentration der Base in der wässrigen, basischen Lösung 5 bis 20 mol/l, bevorzugt 5 bis 15 mol/l.

In einer Ausführungsform erfolgt die Behandlung bei einer Temperatur von 0 bis 100°C, bevorzugt Raumtemperatur.

Dabei entsteht eine Lösung, enthaltend Me^{H} Ionen, und ein fester Rückstand, enthaltend Indium. Diese werden voneinander nach dem Fachmann bekannten Möglichkeiten getrennt.

### Schritt v)

Der in Schritt iv) erhaltene feste Rückstand, enthaltend Indiumionen, wird im Schritt v) mit Schwefelsäure behandelt. Dazu wird der Rückstand in einer Ausführungsform mit konzentrierter Schwefelsäure vermischt. In einer weiteren Ausführungsform wird der feste Rückstand mit einer wässrigen Lösung von Schwefelsäure behandelt. In einer Ausführungsform erfolgt die Behandlung bei einer Temperatur von 0 bis 100 °C, bevorzugt 10 bis 50 °C, insbesondere 25 °C.

In einer Ausführungsform beträgt die Konzentration der wässrigen Säurelösung 0,1 bis 10 mol/l, bevorzugt 1 bis 5, besonders bevorzugt 1 mol/l.

In einer Ausführungsform beträgt das Verhältnis der Stoffmenge an Säureanionen zur Stoffmenge an Indiumkationen 3 : 3, bevorzugt 2 : 3.

Man erhält eine Lösung, enthaltend Indium-Ionen.

### Schritt vi)

Es erfolgt dann die Elektrolytische Behandlung der in Schritt v) entstandenen Lösung zur Abscheidung metallischen Indiums auf der Kathode.

In einer Ausführungsform wird die in Schritt v) entstandene Lösung im Schritt vi) mit einer organischen Säure versetzt.

Im Sinne der Erfindung ist mit dem Begriff "eine organische Säure" auch eine Mischung mehrerer organischer Säuren umfasst.

Bevorzugt ist diese organische Säure eine mit Metallionen Komplexe bildende Säure oder eine Mischung mehrerer mit Metallionen Komplexe bildenden Säuren. Vorzugsweise sind das Nitrilotriessigsäure und/oder Methylglycinsäure.

Man erhält eine Elektrolytlösung. In einer Ausführungsform wird die organische Säure in wässriger Lösung zugegeben. In einer Ausführungsform wird so viel organische Säure zugegeben, dass die Konzentration der Säure in der Elektrolytlösung 1 bis 20 g/l, bevorzugt 10 bis 15 g/l beträgt.

In einer Ausführungsform wird so viel organische Säure zugegeben, dass die Konzentration der Säure in der Elektrolytlösung 0,001 bis 0,3 mol/L, bevorzugt 0,01 bis 0,3 mol/L, besonders bevorzugt 0,1 bis 0,2 mol/L beträgt.

Die so erhaltene Elektrolytlösung wird elektrolytisch behandelt, wobei Indium auf der Kathode abgeschieden wird.

In einer Ausführungsform wird die Elektrolytlösung dazu in einer Elektrolysezelle vorgelegt. Es wird ein Potential von 0,5 bis 5 V, bevorzugt 2 bis 4 V, besonders bevorzugt 3 bis 4 V angelegt und Indium aus der Lösung reduziert und metallisch auf der Kathode abgeschieden. Das so gebildete metallische Indium wird in einer Ausführungsform durch den Fachmann bekannte Methoden, wie Abkratzen, Auflösen oder weitere elektrolytische Behandlung, von der Kathode entfernt.

Vorteilhaft wird im erfindungsgemäßen Verfahren >95% des im Ausgangsmaterial enthaltenen Indium zurückgewonnen. Die Reinheit beträgt dabei > 95%, bevorzugt > 99%, insbesondere >99,99 %

In einer Ausführungsform wird die im Schritt b) oder b-i) erhaltenen Lösung, enthaltend Me^{T}-Ionen weiterbehandelt, mit den Schritten:
vii) Zugabe eines Sulfatsalzes zu der in Schritt b) oder b-i) entstandenen Lösung zur Fällung eines Me^{T}salzes
viii) Behandlung des Me^{T}salzes aus Schritt vii) mit einer wässrigen, basischen Lösung, zum Erhalt einer Me^{T} lonen-haltigen Lösung
ix) Elektrolytische Behandlung der Me^{T} lonen-haltigen Lösung aus Schritt viii) zur Abscheidung metallischen Me^{T} auf der Kathode

### Schritt vii)

In einer Ausführungsform ist das Sulfatsalz in Schritt vii) ausgewählt aus Natriumsulfat, Kaliumsulfat und Ammoniumsulfat.

In einer Ausführungsform beträgt das Verhältnis der Stoffmenge an Sulfatsalz zur Stoffmenge an Me^{T} Ionen, beispielsweise Galliumionen, in der Lösung 4 : 1, bevorzugt 3 : 1, besonders bevorzugt 2 : 1.

Die in der Lösung enthaltenen Me^{T}-Ionen werden dabei als schwerlösliches Doppelsulfat ausgefällt. In einer Ausführungsform handelt es sich für den Fall Me^{T} = Ga um Verbindungen der Formel XGa(SO₄)₂. (wobei X = Na, K und/oder NH₄)

Das Me^{T}-salz wird von der Lösung getrennt und im nächsten Schritt viii) mit einer wässrigen, basischen Lösung behandelt.

### Schritt viii)

In einer Ausführungsform ist die Base in der wässrigen, basischen Lösung eine anorganische Base. In einer Ausführungsform ist sie ausgewählt aus NH₃, KOH, NaOH und Mischungen dieser.

In einer Ausführungsform beträgt die Konzentration der Base in der wässrigen basischen Lösung 0,1 bis 20 mol/l, bevorzugt 1 bis 10 mol/l.

In einer Ausführungsform ist die Menge der wässrigen basischen Lösung so gewählt, dass das Verhältnis der Stoffmenge an Basenanionen zu Me^{T}-Ionen 5 : 1, bevorzugt 3 : 1 beträgt.

In einer Ausführungsform erfolgt die Behandlung des Me^{T}-salzes durch Zugabe der basischen Lösung und Vermengen der Mischung, bevorzugt bei Temperaturen von 0 bis 100 °C, besonders bevorzugt 20 - 50 °C, besonders bevorzugt 20 - 25 °C. In Einer Ausführungsform erfolgt die Zugabe bei Raumtemperatur.

Es entsteht eine Me^{T}-Ionen haltige Lösung.

### Schritt ix)

Die Me^{T} lonen-haltige Lösung wird im nächsten Schritt ix) einer elektrolytischen Behandlung unterzogen. Dazu wird die Lösung als Elektrolyt in einer Elektrolysezelle vorgelegt und ein Potential zwischen den Elektroden der Zelle angelegt.

In einer Ausführungsform beträgt die Spannung 0,5 bis 5 V, bevorzugt 2 bis 4 V, besonders bevorzugt 3 V.

Es erfolgt eine Abscheidung metallischen Me^{T} auf der Kathode. Das metallische Me^{T} kann durch dem Fachmann bekannte Methoden wie Abkratzen, Auflösen, Abschmelzen oder weitere elektrolytische Behandlung von der Kathode entfernt werden.

In einer Ausführungsform ist die ML1+ Galinstan. Dann erfolgt die Gewinnung von Indium bevorzugt mit den Schritten:
A) Behandlung des Galinstans mit einer mineralischen Säure, zum Erhalt einer Lösung, enthaltend Indiumionen, Galliumionen und Zinnionen,
B) Zugabe weiteren Galinstans zu der in Schritt A) erhaltenen Lösung, zum Erhalt einer Galliumionen-haltigen Lösung und eines festen Rückstands, enthaltend Indium, Gallium und Zinn,
C) Zugabe eines Sulfatsalzes zu der in Schritt B) entstandenen Lösung zur Fällung eines Galliumsalzes,
D) Behandlung des Galliumsalzes aus Schritt C) mit einer wässrigen, basischen Lösung, zum Erhalt einer Galliumionen-haltigen Lösung,
E) Elektrolytische Behandlung der Galliumionen-haltigen Lösung aus Schritt D) zur Abscheidung metallischen Galliums auf der Kathode,
F) Behandlung des festen Rückstands aus Schritt B) mit einer mineralischen Säure zum Erhalt einer wässrigen Lösung, enthaltend Indiumionen, Galliumionen und Zinnionen,
G) Zugabe einer Base zu der in Schritt F) erhaltenen Lösung, zum Erhalt eines Niederschlags, enthaltend Galliumionen, Indiumionen und Zinnionen, und einer Lösung, enthaltend Galliumionen und Indiumionen,
H) Zugabe einer organischen Säure zu der in Schritt G) entstandenen Lösung und deren elektrolytische Behandlung, zur Abscheidung von Indium auf der Kathode.
I) Behandlung des in Schritt G) erhaltenen Niederschlags mit einer wässrigen, basischen Lösung, zum Erhalt eines festen Rückstands, enthaltend Indium und Zinn und eine Lösung, enthaltend Galliumionen,
J) Behandlung des in Schritt I) erhaltenen festen Rückstands mit einer Base, wobei eine Zinnionenhaltige Lösung und ein Indiumhaltiger fester Rückstand entsteht,
K) Behandlung des Indiumhaltigen festen Rückstands aus Schritt J) mit Schwefelsäure, zum Erhalt einer Indiumionenhaltigen Lösung,
L) Elektrolytische Behandlung der in Schritt K) entstandenen Lösung zur Abscheidung metallischen Indiums auf der Kathode.

### Schritt A)

In Schritt A) wird das Galinstan zunächst mit einer mineralischen Säure behandelt, wobei die Säure ausgewählt ist aus Salpetersäure, Schwefelsäure, Salzsäure und/oder Mischungen dieser, wobei das Verhältnis der Stoffmenge von Säureanionen zur Gesamtstoffmenge aller Metallatome im Galinstan 10:1 bis 1:1 ist.

In einer Ausführungsform ist die mineralische Säure konzentrierte Säure.

In einer Ausführungsform ist die mineralische Säure eine wässrige Lösung der Säure. In einer Ausführungsform beträgt die Konzentration der Säure in der wässrigen Lösung mindestens 10 Gew.-%.

In einer Ausführungsform ist die Stoffmenge der Säureanionen in der eingesetzten Säure oder wässrigen Lösung der Säure, stöchiometrisch zur Gesamtmenge der Metallatome in der Legierung. In einer Ausführungsform beträgt das Verhältnis der Stoffmenge von Säureanionen zur Stoffmenge an Metallatomen in der Legierung 5 : 1, bevorzugt 3 : 1, besonders bevorzugt 1,1 : 1.

In einer Ausführungsform erfolgt die Behandlung des Galinstans mit der mineralischen Säure durch Zugabe der Säure oder Säurelösung zum Galinstan und Vermengen der Komponenten, wobei zunächst eine Suspension entsteht.

In einer Ausführungsform erfolgt die Behandlung bei Temperaturen von 0 bis 110 °C, bevorzugt 70 bis 100 °C, besonders bevorzugt bei 90 bis 100 °C.

Durch die Behandlung des Galinstan mit Säure bildet sich eine erste Lösung, enthaltend Indium, Gallium und Zinn.

### Schritt B)

Zu der in Schritt A) erhaltenen Lösung wird im nächsten Schritt B) weiteres Galinstan gegeben. In einer Ausführungsform ist die Menge an weiterem Galinstan so groß, dass die Stoffmenge der in diesem weiteren Galinstan enthaltenen Galliumatome mindestens so groß ist, wie dieSumme der Stoffmengen der in der ersten Lösung enthaltenen Indium- und Zinnionen.

Indium und Zinn, welche in der Lösung zunächst noch in oxidierter Form vorliegen, werden dabei zu den jeweiligen Metallen reduziert. Gleichzeitig geht das Gallium aus dem weiteren Galinstan in Lösung.

Das Gallium liegt vorzugsweise als Ga³⁺-Ionen vor.

Man erhält eine Lösung, enthaltend Gallium und einen festen Rückstand, enthaltend Gallium, Indium und Zinn in metallischer Form.

### Schritt C)

Im nächsten Schritt C) wird zu der im Schritt B) erhaltenen Lösung ein Sulfatsalz gegeben. In einer Ausführungsform ist das Sulfatsalz ausgewählt aus Natriumsulfat, Kaliumsulfat und Ammoniumsulfat.

In einer Ausführungsform beträgt das Verhältnis der Stoffmenge an Sulfatsalz zur Stoffmenge an Gallium in der Lösung 4 : 1, bevorzugt 3 : 1, besonders bevorzugt 2 : 1.

Die in der Lösung enthaltenen Galliumionen werden dabei als schwerlösliches Doppelsulfat ausgefällt. In einer Ausführungsform handelt es sich dabei um Verbindungen der Formel XGa(SO₄)₂. (wobei X = Na, K und/oder NH₄)

### Schritt D)

Das Galliumsalz wird von der Lösung getrennt und im nächsten Schritt D) mit einer wässrigen, basischen Lösung behandelt.

In einer Ausführungsform ist die Base in der wässrigen, basischen Lösung eine anorganische Base. In einer Ausführungsform ist sie ausgewählt aus NH₃, KOH, NaOH und Mischungen dieser.

In einer Ausführungsform beträgt die Konzentration der Base in der wässrigen basischen Lösung 0,1 bis 20 mol/l, bevorzugt 1 bis 10 mol/l.

In einer Ausführungsform ist die Menge der wässrigen basischen Lösung so gewählt, dass das Verhältnis der Stoffmenge an Basenanionen zu Galliumkationen 5 : 1, bevorzugt 3 : 1 beträgt.

In einer Ausführungsform erfolgt die Behandlung des Galliumsalzes durch Zugabe der basischen Lösung und Vermengen der Mischung, bevorzugt bei Temperaturen von 0 bis 100 °C, besonders bevorzugt 20 - 50 °C, besonders bevorzugt 20 - 25 °C. In Einer Ausführungsform erfolgt die Zugabe bei Raumtemperatur.

Es entsteht eine Gallium-haltige Lösung.

### Schritt E)

Die galliumhaltige Lösung wird im Schritt E) einer elektrolytischen Behandlung unterzogen. Dazu wird die Lösung als Elektrolyt in einer Elektrolysezelle vorgelegt und ein Potential zwischen den Elektroden der Zelle angelegt.

In einer Ausführungsform beträgt die Spannung 0,5 bis 5 V, bevorzugt 2 bis 4 V, besonders bevorzugt 3 V.

Es erfolgt eine Abscheidung metallischen Galliums auf der Kathode. Das metallische Gallium kann durch dem Fachmann bekannte Methoden wie Abkratzen, Auflösen, Abschmelzen oder weitere elektrolytische Behandlung von der Kathode entfernt werden.

### Schritt F)

Der in Schritt B) erhaltene feste Rückstand, enthaltend Indium, Zinn und Gallium, wird im Schritt F) mit einer mineralischen Säure, ausgewählt aus Schwefelsäure, Salpetersäure und Mischungen dieser behandelt.

In einer Ausführungsform ist die mineralische Säure eine wässrige Lösung der Säure. In einer Ausführungsform beträgt die Konzentration der Säure in der wässrigen Lösung 0,1 bis 20 mol/l, bevorzugt 1 bis 10 mol/l.

In einer Ausführungsform ist die Stoffmenge der Säureanionen in der eingesetzten Säure oder wässrigen Lösung der Säure, stöchiometrisch zur Gesamtmenge der Metallatome in der Legierung. In einer Ausführungsform beträgt das Verhältnis der Stoffmenge von Säureanionen zur Stoffmenge an Metallatomen in der Legierung 5: 1 bis 1:1, bevorzugt 3 : 1 bis 1:1, besonders bevorzugt 1,1 : 1.

In einer Ausführungsform erfolgt die Behandlung der Metalllegierung mit der mineralischen Säure durch Zugabe der Säure oder Säurelösung zur aufzubereitenden Metalllegierung und Vermengen der Komponenten, wobei zunächst eine Suspension entsteht.

In einer Ausführungsform erfolgt die Behandlung bei Temperaturen von 0 bis 110 °C, bevorzugt 70 bis 100 °C, besonders bevorzugt bei 90 bis 100 °C.

Durch die Behandlung der Metalllegierung mit Säure bildet sich eine Lösung, enthaltend Indium, Gallium und Zinn.

### Schritt G)

Im Schritt G) erfolgt die Zugabe einer Base, bevorzugt in einer wässrigen basischen Lösung, zu der in Schritt F) entstandenen Lösung.

In einer Ausführungsform ist die Base eine anorganische Base. In einer Ausführungsform ist sie ausgewählt aus NH₃, KOH, NaOH und Mischungen dieser.

In einer Ausführungsform beträgt die Konzentration der Base in der wässrigen basischen Lösung 0,1 bis 20 mol/l, bevorzugt 1 bis 10 mol/l.

In einer Ausführungsform ist die Menge der wässrigen basischen Lösung so gewählt, dass das Verhältnis der Stoffmenge an Basenanionen zu Zinnkationen 5 : 1, bevorzugt 3 : 1, besonders bevorzugt 1,1 : 1 beträgt.

In einer Ausführungsform erfolgt die Behandlung der in Schritt F) entstandenen Lösung durch Zugabe der Base und Vermengen der Mischung, bevorzugt bei Temperaturen von 0 bis 100 °C, besonders bevorzugt 100 °C.

Zinn wird dabei als basischer Niederschlag ausgefällt und in einer Ausführungsform durch dem Fachmann bekannte Methoden von der Lösung abgetrennt. Man erhält eine Lösung, enthaltend Gallium und Indium.

### Schritt H)

Zu der in Schritt G) erhaltenen Lösung wird im Schritt H) eine organische Säure gegeben. Im Sinne der Erfindung ist damit auch eine Mischung mehrerer organischer Säuren umfasst.

Bevorzugt ist die organische Säure eine mit Metallionen Komplexe bildende Säure oder eine Mischung mehrerer mit Metallionen Komplexe bildenden Säuren, beispielsweise Nitrilotriessigsäure und/oder Methylglycinsäure oder eine Mischung dieser.

Vorteilhaft bildet die Säure Komplexe mit Indium, welches dann effektiver abgeschieden wird. Die organische Säure verhindert Dendritenwachstum und es wird so Indium als eine glatte Indiumschicht abgeschieden.

Man erhält eine Elektrolytlösung. In einer Ausführungsform wird die organische Säure in wässriger Lösung zugegeben. In einer Ausführungsform wird so viel organische Säure zugegeben, dass die Konzentration der Säure in der Elektrolytlösung 1 bis 20 g/l, bevorzugt 10 bis 15 g/l beträgt.

In einer Ausführungsform wird so viel organische Säure zugegeben, dass die Konzentration der Säure in der Elektrolytlösung 0,001 bis 0,3 mol/L, bevorzugt 0,01 bis 0,3 mol/L, besonders bevorzugt 0,1 bis 0,2 mol/L beträgt.

Die so erhaltene Elektrolytlösung wird elektrolytisch behandelt, wobei Indium auf der Kathode abgeschieden wird.

In einer Ausführungsform wird die Elektrolytlösung dazu in einer Elektrolysezelle vorgelegt. Es wird ein Potential von 0,1 bis 10, bevorzugt 0,5 bis 5 V angelegt und Indium aus der Lösung reduziert und metallisch auf der Kathode abgeschieden. Das so gebildete metallische Indium wird in einer Ausführungsform durch den Fachmann bekannte Methoden, wie Abkratzen, Auflösen oder weitere elektrolytische Behandlung, von der Kathode entfernt.

### Schritt I)

Der in Schritt G) erhaltene Niederschlag wird im Schritt I) mit einer wässrigen, basischen Lösung behandelt.

In einer Ausführungsform ist die Base eine anorganische Base. In einer Ausführungsform ist sie ausgewählt aus KOH, NaOH und Mischungen dieser.

In einer Ausführungsform beträgt die Konzentration der Base in der wässrigen basischen Lösung 0,1 bis 20 mol/l, bevorzugt 1 bis 10 mol/l, besonders bevorzugt 1 bis 5 mol/l.

In einer Ausführungsform ist die Menge der wässrigen basischen Lösung so gewählt, dass das Verhältnis der Stoffmenge an Basenanionen zu Metallatomen beträgt 5: 1, bevorzugt 3 : 1.

Zinn und ein Teil des Indiums werden dabei als basischer fester Rückstand ausgefällt und in einer Ausführungsform durch dem Fachmann bekannte Methoden von der Lösung abgetrennt. Man erhält eine Lösung, enthaltend Gallium und Indium.

### Schritt J)

Der in Schritt I) entstandene basische feste Rückstand wird im Schritt J) erneut mit einer Base behandelt. In einer Ausführungsform ist die Base ausgewählt aus NaOH, KOH und Mischungen dieser.

In einer Ausführungsform wird die Base konzentriert zugegeben. In einer Ausführungsform wird die Base in einer wässrigen basischen Lösung zugegeben. In einer Ausführungsform beträgt die Konzentration der Base in der wässrigen, basischen Lösung 5 bis 20 mol/l, bevorzugt 5 bis 15 mol/l.

In einer Ausführungsform erfolgt die Behandlung bei einer Temperatur von 0 bis 100 °C, bevorzugt Raumtemperatur.

Dabei entsteht eine wässrige Lösung, enthaltend Zinn und ein fester Rückstand, enthaltend Indium. Diese werden voneinander nach dem Fachmann bekannten Möglichkeiten getrennt

### Schritt K)

Der in Schritt J) erhaltene feste Rückstand, enthaltend Indium, wird im Schritt K) mit Schwefelsäure behandelt. Dazu wird der Rückstand in einer Ausführungsform mit konzentrierter Schwefelsäure vermischt. In einer weiteren Ausführungsform wird der feste Rückstand mit einer wässrigen Lösung von Schwefelsäure behandelt. In einer Ausführungsform erfolgt die Behandlung bei einer Temperatur von 0 bis 100 °C, bevorzugt 10 bis 50 °C, insbesondere 25 °C.

In einer Ausführungsform beträgt die Konzentration der wässrigen Säurelösung 0,1 bis 10 mol/l, bevorzugt 1 bis 5, besonders bevorzugt 1 mol/l.

In einer Ausführungsform beträgt das Verhältnis der Stoffmenge an Säureanionen zur Stoffmenge an Indiumkationen 3 : 3, bevorzugt 2 : 3.

### Schritt L)

Es erfolgt dann die Elektrolytische Behandlung der in Schritt K) entstandenen Lösung zur Abscheidung metallischen Indiums auf der Kathode.

In einer Ausführungsform wird die in Schritt K) entstandene Lösung im Schritt L) mit einer organischen Säure versetzt.

Im Sinne der Erfindung ist mit dem Begriff "eine organische Säure" auch eine Mischung mehrerer organischer Säuren umfasst.

Bevorzugt ist die organische Säure eine mit Metallionen Komplexe bildende Säure oder eine Mischung mehrerer mit Metallionen Komplexe bildenden Säuren, beispielsweise Nitrilotriessigsäure, Methylglycinsäure oder eine Mischung dieser.

Man erhält eine Elektrolytlösung. In einer Ausführungsform wird die organische Säure in wässriger Lösung zugegeben. In einer Ausführungsform wird so viel organische Säure zugegeben, dass die Konzentration der Säure in der Elektrolytlösung 1 bis 20 g/l, bevorzugt 10 bis 15 g/l beträgt.

In einer Ausführungsform wird so viel organische Säure zugegeben, dass die Konzentration der Säure in der Elektrolytlösung 0,001 bis 0,3 mol/L, bevorzugt 0,01 bis 0,3 mol/L, besonders bevorzugt 0,1 bis 0,2 mol/L beträgt.

Die so erhaltene Elektrolytlösung wird elektrolytisch behandelt, wobei Indium auf der Kathode abgeschieden wird.

In einer Ausführungsform wird die Elektrolytlösung dazu in einer Elektrolysezelle vorgelegt. Es wird ein Potential von 0,5 bis 5 V, bevorzugt 2 bis 4 V, besonders bevorzugt 3 bis 4 V angelegt und Indium aus der Lösung reduziert und metallisch auf der Kathode abgeschieden. Das so gebildete metallische Indium wird in einer Ausführungsform durch den Fachmann bekannte Methoden, wie Abkratzen, auflösen oder weitere elektrolytische Behandlung, von der Kathode entfernt.

In einer Ausführungsform erfolgen die Schritte F) bis L) direkt nach Schritt B).

Vorteilhaft wird im erfindungsgemäßen Verfahren >95 % des im Ausgangsmaterial enthaltenen Indium zurückgewonnen. Die Reinheit beträgt dabei > 95%, bevorzugt > 99%, insbesondere >99,99 %

Im Sinne der Erfindung kann der Begriff "Metalle" auch die korrespondierenden "Metallionen" beinhalten und umgekehrt.

Es empfiehlt sich, die Ausführungsformen miteinander zu kombinieren.

Die Erfindung soll durch nachfolgende Ausführungsbeispiele näher erläutert werden, ohne jedoch beschränkt zu werden.

### Ausführungsbeispiele:

Basis bildet eine Flüssigmetalllegierung auch bekannt unterGalinstan der Firma geratherm Medical AG der Zusammensetzung ∼ 70% Ga, ∼ 20 % In, ∼ 10 % Sn.

### Ausführungsbeispiel 1:

100 g Galinstan wurde mit Schwefelsäure vermischt. Die dafür eingesetzte Säurelösung wurde vorbereitet, indem 70 ml konz. Schwefelsäure mit 200 ml Wasser verdünnt wurden. Die Lösung wurde auf 100 °C erhitzt und es wurden 300 ml konz. HNO₃ über 2 Stunden zugegeben. Dadurch wurde das gesamte Galinstan in Lösung überführt. Diese Lösung hatte folgende Zusammensetzung: 11,4 g/L In, 40 g/L Ga und 5,7 g/L Sn. (Indium 20%, Gallium 70 %, Zinn 10 %)

Es wurden 100 g unbehandeltes Galinstan und 50 g Schwefelsäure zu dieser Lösung zugegeben und bei 100 °C für 10 Stunden erhitzt. Nach der Reaktion hatte die Lösung folgende Zusammensetzung:
Indium 0,6 g/L, Zinn 0,1 g/L, Gallium 100 g/L.

Die Lösung wurde filtriert und 40 g K₂SO₄ zu dieser Lösung zugegeben. Nach drei Stunden bei 100 °C sind 40 g Kristalle ausgefallen. Diese konnten als KGaSO₄ identifiziert werden. Die Kristalle wurden mit heißem Wasser gewaschen und in 1 L einer 3 mol/L NaOH Lösung gelöst. Diese Lösung, welche 19 g/L Gallium enthielt, wurde dann einer Elektrolyse unterzogen. Dabei wurde als Material für die Kathode und Anode Stahlblech gewählt. Die Elektrolyse wurde bei einer Spannung von 3 V und einem Strom von 3 A durchgeführt. Nach 13 Stunden (-50 % Ausbeute) war aus der Lösung Gallium bis auf einen Wert von bis zu 3 g/L abgereichert. Das abgeschiedene Gallium besitzt eine Reinheit von 99.97 %.

### Ausführungsbeispiel 2:

120 g von der restlichen bei 25 °C festen Indium-Gallium-Zinn Legierung aus Bsp. 1, der Zusammensetzung: 38 % Gallium, 19 % Zinn und 43 % Indium, wurden mit 1 L Lösung, bestehend aus 100 ml konz. H₂SO₄ und 200 ml konz. HNO₃ gelaugt. Nach 10 Stunden Reaktionszeit wurde eine Lösung erhalten, mit folgender Zusammensetzung:
47 g/L Gallium, 23 g/L Zinn, 53 g/L Indium.

Zu dieser Lösung wurden 200 mL einer 5 mol/L NaOH-Lösung zugegeben, bis der pH-Wert = 2 erreicht wurde. Es wurden 127 g Präzipitat (17 % Gallium, 9 % Zinn, 20 % Indium) und 1200 ml einer Lösung (21 g/L Gallium, 0 g/L Zinn, 23 g/L Indium) erhalten. Diese wurde nach Zugabe von 10 g Nitrilotriessigsäure elektrolysiert. Die Zelle wurde aus einer Stahlkathode und einer Bleianode zusammengesetzt. Nach 19 Stunden Elektrolysezeit waren 23 g Indium abgeschieden. Die Kathodische Stromausbeute lag bei 85 %. Die Reinheit des abgeschiedenen Indiums betrug 99,99 %.

### Ausführungsbeispiel 3:

Das Präzipitat aus Ausführungsbeispiel 2 (17% Gallium, 9 % Zinn, 20 % Indium) wurde mit NaOH bei pH = 12 gewaschen. Das enthaltene Gallium wurde vollständig ausgewaschen und es wurden 500 ml Lösung, welche 43 g/L Gallium enthielt erhalten. Diese Lösung wurde analog dem Ausführungsbeispiel 1 elektrolysiert und 30 g Gallium-Metall erhalten.

Das restliche Präzipitat wurde mit 250 ml einer 5 mol/L NaOH-Lösung bei 100 °C für 3 Stunden gerührt. Dabei ging Zinn selektiv in die Lösung über und es blieb ein indiumhaltiges Präzipitat übrig. Nach der Reaktion wurde eine Lösung, welche 45g/L Zinn und kein Indium enthielt, erhalten. Der restliche Feststoff, der nun nur noch Indium enthielt wurde in 100 mL 10 M Schwefelsäure gelöst und nach Zugabe von 0,1 g Nitriloessigsäure bei einer Zellspannung von 3 V elektrolysiert. Es wurden so 20 g Indiummetall einer Reinheit von 99,99 % erhalten.

## Patentansprüche

1. Verfahren zur Abtrennung von Indium aus Metalllegierungen (ML1), enthaltend Indium und mindestens ein Metall mit einem tieferen Normalpotential als Indium (Me^{T}), durch sauren Aufschluss, wobei der Anteil an Indium in der Metalllegierung ML1 5 bis 50 %, bezogen auf die Gesamtmasse der Legierung beträgt, **dadurch gekennzeichnet,**
- **dass** zunächst der Anteil an Me^{T} in der Metalllegierung ML1 verringert wird,
zum Erhalt einer Metalllegierung ML2,
wobei die Verringerung des Anteils an Me^{T} folgende Schritte umfasst:
a) Behandlung der Metalllegierung ML1 mit einer mineralischen Säure bei Temperaturen von 0 bis 110 °C,
wobei die Konzentration der Säure 0,3 bis 10 mol/l beträgt
wobei das Verhältnis der Stoffmenge von Säureanionen zur Gesamtstoffmenge aller Metallatome in der Legierung ML1 10 : 1 bis 1:1 ist,
zum Erhalt einer ersten Lösung, enthaltend Indiumionen und Me^{T} Ionen, und
b) Zugabe weiterer Metalllegierung ML1 zu der in Schritt a) erhaltenen ersten Lösung, zum Erhalt einer zweiten Lösung, enthaltend Me^{T} Ionen,
und einer Metalllegierung ML2, enthaltend Indium und Me^{T}
wobei der Anteil an Me^{T} in ML2 geringer ist, als in ML1,
wobei die Menge an zugegebener weiterer Metalllegierung ML1 so groß ist, dass die Stoffmenge der Me^{T} Ionen dieser weiteren ML1 mindestens so groß ist, wie die Stoffmenge der in der ersten Lösung enthaltenen Indiumionen,
- **dass** im Anschluss ein saurer Aufschluss von ML2 erfolgt, zum Erhalt einer wässrigen Aufschlusslösung AL1, enthaltend Indiumionen und Me^{T} Ionen,
- und **dass** die Abtrennung von Indium aus der Aufschlusslösung AL1 erfolgt.

2. Verfahren nach Anspruch 1, **dadurch gekennzeichnet, dass** der saure Aufschluss durch Behandlung von ML2 mit einer mineralischen Säure erfolgt.

3. Verfahren nach Anspruch 2, **dadurch gekennzeichnet, dass** die Abtrennung von hdium aus der Aufschlusslösung AL1 folgende Schritte umfasst:
Zugabe einer organischen Säure zu der Aufschlusslösung und deren elektrolytische Behandlung, zur Abscheidung von Indium auf der Kathode.

4. Verfahren nach einem der Ansprüche 1 bis 3, **dadurch gekennzeichnet,**
- **dass** die Metalllegierung ML1 zusätzlich mindestens ein Metall mit einem höheren Normalpotiential als Indium (Me^{H}) enthält,
wobei die Metalllegierung in dem Fall ML1+ genannt wird,
wobei die Metalllegierung ML2 ML2+ genannt wird und wobei die Aufschlusslösung AL2 genannt wird,
wobei die Schritte a) und b) durch die Schritte a-i) und b-i) ersetzt werden,
wobei gilt:
a-i) Behandlung der Metalllegierung ML1+ mit einer mineralischen Säure bei Temperaturen von 0 bis 110 °C,
wobei das Verhältnis der Stoffmenge von Säureanionen zur Gesamtstoffmenge aller Metallatome in der Legierung 10 : 1 bis 1:1 ist,
zum Erhalt einer ersten Lösung, enthaltend Indiumionen, Me^{T} Ionen und Me^{H} Ionen, und
b-i) Zugabe weiterer Metalllegierung ML1+ und/oder ML1 zu der in Schritt a-i) erhaltenen ersten Lösung,
zum Erhalt einer zweiten Lösung, enthaltend Me^{T} Ionen,
und einer Metalllegierung ML2+, enthaltend Indium, Me^{T} und Me^{H},
wobei der Anteil an Me^{T} in ML2+ geringer ist, als in ML1+,
wobei die Menge an zugegebener weiterer Metalllegierung ML1 und/oder ML1+ so groß ist, dass die Stoffmenge der Me^{T} Ionen dieser weiteren ML1 und/oder ML1+ mindestens so groß ist, wie die Summe der Stoffmengen der in der ersten Lösung enthaltenen Indiumionen und Me^{H} Ionen.

5. Verfahren nach Anspruch 4, **dadurch gekennzeichnet, dass** der saure Aufschluss von ML2+ durch Behandlung mit einer mineralischen Säure erfolgt, zum Erhalt einer wässrigen Aufschlusslösung AL2, enthaltend Indiumionen, Me^{T} Ionen und Me^{H} Ionen.

6. Verfahren nach einem der Ansprüche 4 oder 5, **dadurch gekennzeichnet, dass** die Abtrennung von Indium aus der Aufschlusslösung AL2 folgende Schritte umfasst:
i) Zugabe einer Base zu der Aufschlusslösung AL2, zum Erhalt eines Niederschlags, enthaltend Indiumionen, Me^{T} Ionen und Me^{H} Ionen, und einer Lösung, enthaltend Indiumionen und Me^{T} Ionen, jedoch keine Me^{H} Ionen,
ii) Zugabe einer organischen Säure zu der in Schritt i) entstandenen Lösung und deren elektrolytische Behandlung, zur Abscheidung von Indium auf der Kathode,
iii) Behandlung des in Schritt i) erhaltenen Niederschlags mit einer wässrigen, basischen Lösung, zum Erhalt eines festen Rückstands, enthaltend Indium und Me^{H} Ionen und einer Lösung, enthaltend Me^{T} Ionen,
iv) Behandlung des in Schritt iii) erhaltenen Rückstands mit einer Base, wobei eine Me^{H} lonenhaltige Lösung und ein Indium-haltiger fester Rückstand entsteht,
v) Behandlung des Indium-haltigen, festen Rückstands aus Schritt iv) mit Schwefelsäure, zum Erhalt einer Indiumionen-haltigen Lösung,
vi) Elektrolytische Behandlung der in Schritt v) erhaltenen Lösung zur Abscheidung metallischen Indiums auf der Kathode.

7. Verfahren nach einem der Ansprüche 1 bis 6, **dadurch gekennzeichnet, dass** die in Schritt b) oder b-i) erhaltene Me^{T} lonen-haltige, zweite Lösung weiterbehandelt wird mit den Schritten:
vii) Zugabe eines Sulfatsalzes zu der in Schritt b) oder b-i) entstandenen zweiten Lösung zur Fällung eines Me^{T}salzes,
viii) Behandlung des Me^{T}salzes aus Schritt vii) mit einer wässrigen, basischen Lösung, zum Erhalt einer Me^{T} lonen-haltigen Lösung,
ix) Elektrolytische Behandlung der Me^{T} lonen-haltigen Lösung aus Schritt viii) zur Abscheidung metallischen Me^{T} auf der Kathode.

8. Verfahren nach einem der Ansprüche 1 bis 7, **dadurch gekennzeichnet, dass** die Behandlung von ML2 oder ML2+ mit Säure bei Temperaturen von 0 bis 110°C erfolgt.

9. Verfahren nach einem der Ansprüche 7 oder 8, **dadurch gekennzeichnet, dass** das Sulfatsalz ausgewählt ist aus Natriumsulfat, Kaliumsulfat und Ammoniumsulfat.

10. Verfahren nach einem der Ansprüche 7 bis 9, **dadurch gekennzeichnet, dass** die Base in der wässrigen, basischen Lösung in Schritt viii) eine anorganische Base ist.

11. Verfahren nach einem der Ansprüche 7 bis 10, **dadurch gekennzeichnet, dass** die Menge der wässrigen basischen Lösung im Schritt viii) so gewählt ist, dass das Verhältnis der Stoffmenge an Basenanionen zu Me^{T}-Ionen 5 : 1 beträgt.

12. Verfahren nach einem der Ansprüche 3 bis 11, **dadurch gekennzeichnet, dass** die organische Säure eine mit Metallionen Komplexe bildende Säure ist.
